# EUROPÄISCHE PATENTSCHRIFT

(11) **EP 1 762 590 B1**
(45) Veröffentlichungstag und Bekanntmachung des Hinweises auf die Patenterteilung: **23.01.2008**
(21) Anmeldenummer: 05108379.8
(22) Anmeldetag: 13.09.2005
(51) Int. Cl.: C08K 5/06, C08L 29/14, B32B 17/10

(54) **Weichmacherhaltige PVB-Folien mit Etherbindungen enthaltenden Carbonsäureestern als Co-Weichmacher**
Plasticizer-containing PVB-sheets comprising co-plasticizers based on carboxylic acid esters ethers
Feuilles de PVB contenant un agent plastifiant ainsi qu'un co-agent plastifiant à base d'ester d'acide carboxylique avec liaisons éther

(43) Veröffentlichungstag der Anmeldung: 14.03.2007
(73) Patentinhaber: Kuraray Europe GmbH, 65926 Frankfurt am Main (DE)
(72) Erfinder: Keller, Uwe, 53177, Bonn (DE)
(74) Vertreter: Kisters, Michael Marcus

(56) Entgegenhaltungen:
- US-A1- 2004 065 229
- US-B1- 6 887 577

## Beschreibung

### Technisches Gebiet

Die Erfindung betrifft eine als Zwischenschicht in Verbundsicherheitsgläsern geeignete weichmacherhaltige Folie auf der Basis von teilacetalisierten Polyvinylalkoholen, insbesondere auf der Basis von Polyvinylbutyral (PVB).

### Stand der Technik

Verbundsicherheitsgläser bestehen im allgemeinen aus zwei Glasscheiben und einer die Glasscheiben verbindenden Zwischenfolie. Als Folienmaterial wird überwiegend weichmacherhaltiger teilacetalisierter Polyvinylalkohol, insbesondere Polyvinylbutyral (PVB) verwendet. Verbundsicherheitsgläser werden beispielsweise als Windschutzscheiben oder Seitenverglasungen im Kraftfahrzeugbereich sowie als Sicherheitsverglasung im Baubereich eingesetzt.

Als Weichmacher für solche PVB-Folien sind mittlerweile aliphatische Diester des Tri- bzw. Tetraethylenglykols etabliert. Besonders häufig werden als Weichmacher 3G7, 3G8 oder 4G7 eingesetzt, wobei die erste Ziffer die Anzahl der Ethlenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH (CH₂CH₃) CO (OCH₂CH₂)₃O₂CCH (CH₂CH₃) C₄H₉.

Als Weichmacher für teilacetalisierte Polyvinylalkohole werden bevorzugt Verbindungen eingesetzt, die in einer VSG-Zwischenschichtfolie für geringe Trübung, niedrige Feuchtigkeitsaufnahme, gute Haftung zum Glas und eine ausreichende Kälteflexibilität der Folie sorgen. Weiterhin müssen diese Verbindungen eine ausreichende Verträglichkeit mit dem teilacetalisierten Polyvinylalkohol aufweisen, d.h. in einer ausreichenden Menge ohne auszuschwitzen mit diesem mischbar sein.

Allgemein sinkt die Verträglichkeit von Weichmacher und teilacetalisiertem Polyvinylalkohol mit der Abnahme des polaren Charakters des Weichmachers. So sind Weichmacher mit höherer Polarität mit PVB besser verträglich. Alternativ steigt die Verträglichkeit von Weichmachern geringer Polarität mit Abnahme des Polyvinylalkohol-Gehalts (PVOH), d.h. der Polarität des PVB-Harzes.

In EP 0877 665 B1 wird das wenig polare 3G8 als Weichmacher für PVB-Folien empfohlen, weil es dem Folienprodukt eine verbesserte Feuchteresistenz verleiht. Da Feuchtigkeit die Haftung zwischen Klebfolie und Glas dauerhaft schädigen kann und im Extremfall zu sichtbaren Ablösungen der Folie vom Glas führt, wird bei der Herstellung von Verbundsicherheitsglas (VSG) mit PVB-Folie eine möglichst hohe Feuchteresistenz der Folie angestrebt.

Die verbesserte Feuchteresistenz von PVB-Folien, die mit 3G8 weichgemacht sind, ergibt sich vermutlich aus dem stärker unpolaren Charakters dieses Weichmachers im Vergleich zu Weichmachern wie 4G7 oder 3G7, da anstelle eines Heptansäurerestes ein Octansäurerest das Weichmachermolekül chemisch konstituiert. Ein weiterer Vorteil bei der Verwendung von 3G8 ist dessen relativ geringe Flüchtigkeit, die zum einen einer Weichmacherverarmung an frei liegenden Kanten des VSG entgegenwirkt und zum anderen in einer nur geringen Geruchsbelästigung bei der Weiterverarbeitung der Folie zu VSG resultiert.

Als Nachteil bei der Verwendung von 3G8 hat sich jedoch herausgestellt, dass dieser Weichmacher gerade aufgrund seiner geringen Polarität nur bedingt mit Polyvinylbutyral verträglich ist.

Insbesondere können mit 3G8 nicht ohne weiteres PVB-Typen weichgemacht werden, die einen Polyvinylalkoholgehalt größer 19,5 Gew.% aufweisen, da dann ein Ausschwitzen des Weichmachers zu erwarten ist. Wie bei anderen weichmacherhaltigen Kunststoffprodukten ist das Ausschwitzen von Weichmachers auch bei Zwischenschichtfolien für VSG unerwünscht, da eine Abgabe des Weichmachers entlang der freiliegenden Kante des PVB am Rand des Verbundes zu vorzeitiger Delamination führen kann. Auf Grund der geringen Verträglichkeit bzw. der Neigung von 3G8 zum Ausschwitzen ist in EP 0877 665 B1 der Einsatz von 3G8 auf PVB-Typen mit einem Polyvinylalkoholgehalt von 17 - 19,5 Gew.% limitiert.

Zur Verbesserung der Kompatibilität von PVB mit unpolaren Weichmachern wie 3G8 schlägt WO 02/102591 A1 den Zusatz von nicht-ionischen Tensiden vor. Diese erhöhen die Aufnahmefähigkeit auch von PVB mit einem Polyvinylalkoholgehalt oberhalb 19,5 Gew.% für Weichmacher geringer Polarität und verhindern das unerwünschte Ausschwitzen. Bevorzugt werden als nicht-ionische Tenside mehrfach ethoxylierte aliphatische oder aromatische Alkohole verwendet.

DE 199 38 159 Al offenbart zur Erhöhung der Weichmacheraufnahmefähigkeit von PVB den Einsatz eines Weichmachergemischs aus einem Standardweichmacher wie 3G7 und einem oder mehreren Polyalkyenglycolen. Durch die Verwendung einer solchen Weichmachermischung kann die PVB-Folie eine größere Menge an Weichmacher ohne Ausschwitzen aufnehmen.

US 3,644,594 offenbart eine große Anzahl von Weichmachern für PVB, unter anderem auch Glycolester von Dicarbonsäuren. Die Verwendung eines bestimmten Weichmachergemischs und die Verbesserung der Kompatibilität zwischen Weichmacher und PVB bzw. des Ausschwitzverhaltens ist hier nicht beschrieben.

Im Prinzip trifft die mangelnde Verträglichkeit von Weichmacher/PVB-Mischungen auch für andere, unpolare Weichmacher wie z.B. Dialkyladipate mit aliphatischen bzw. cycloaliphatischen Esteralkoholen, Dialkylsebazate, oder Phthalatweichmacher wie Dioctylphthalat zu. Bei mangelnder Verträglichkeit beobachtet man auch hier ein Ausschwitzen des Weichmachers, insbesondere bei Lagerung in feuchter und/oder warmer Atmosphäre.

### Aufgabe

Es bestand daher Bedarf an Weichmachersystemen, die eine hohe Verträglichkeit mit teilacetalisierten Polyvinylalkoholen aufweisen.

### Darstellung der Erfindung

Überraschenderweise wurde gefunden, dass das Ausschwitzen von wenig polaren Weichmachern aus teilacetalisierten Polyvinylalkoholen durch Zusatz von Co-Weichmachern aus der Gruppe der Ester von Carbonsäuren mit Alkoholen, die mindestens eine Etherbindung enthalten, weitgehend verhindert werden kann.

Die Verwendung von Carbonsäureestern, die im Alkoholteil mindestens eine Etherverbindung enthalten als Weichmacher für PVB ist bekannt und in JP 59-213750 und US 4,452,935 offenbart. Diese Schriften beschreiben den Einsatz dieser Verbindungen als alleinigen Weichmacher der PVB-Mischung, die Verwendung in Gemischen mit Weichmachern geringer Polarität wie auch die vorteilhafte Wirkung der Unterdrückung des Ausschwitzens der Weichmacher aus dem PVB ist hier nicht beschrieben.

Gegenstand der vorliegenden Erfindung sind daher Weichmacherhaltige Folien auf der Basis von teilacetalisierten Polyvinylalkoholen, enthaltend
a) 60 bis 85 Gew.% teilacetalisierten Polyvinylalkohol
b) 14 bis 39 Gew.% mindestens eines Weichmachers mit geringer Polarität,
c) 1 - 20 Gew.%, bevorzugt 2 - 10 Gew.% mindestens eines Co-Weichmachers der Formeln I und/oder II

   R¹-O(-R²-O)ₙ-CO-R⁵ I

   R¹-O(-R²-O)ₙ-CO-R³-CO-(O-R⁴-)ₘO-R⁶ II

   mit R¹,R⁵,R⁶: unabhängig voneinander H, aliphatischer oder aromatischer Rest mit 1 bis 12 C-Atomen,
   R³: glatte Bindung, zweiwertiger aliphatischer oder aromatischer Rest mit 1 bis 12 C-Atomen
   R², R⁴: unabhängig voneinander zweiwertiger aliphatischer oder aromatischer Rest mit 1 bis 12 C-Atomen
   n, m : unabhängig voneinander ganze Zahlen von 1 bis 10, insbesondere 1 bis 5

Die Angaben in Gew.% beziehen sich auf die Gesamtrezeptur.

Bevorzugt stehen R² und R⁴ unabhängig voneinander für Ethylen-, Propylen- oder Butylenreste, d.h. die Alkoholfunktionen der Ester sind durch Oligomere des Ethylen-, Propylen oder Butylenoxids gebildet.

R¹,R⁵ und R⁶ bedeuten unabhängig voneinander bevorzugt Methyl-, Ethyl-, Propyl-, Butyl- oder Hexylreste.

Die Carbonsäuren der Ester nach Formel I sind insbesondere Benzoesäure, Cyclohexancarbonsäure, Essigsäure, Propionsäure und Carbonsäuren mit 4-18 Kohlenstoffatomen. Als Carbonsäurebestandteil der Ester gemäß Formel II werden folgende Dicarbonsäuren bevorzugt: Oxalsäure, Malonsäure, Glutarsäure, Bernsteinsäure, Adipinsäure, Pimelinsäure, Azelainsäure, Sebazinsäure, Terephthalsäure, Phthalsäure, Isophthalsäure sowie sämtliche Stereoisomere der Cyclohexandicarbonsäure.

Zur Gruppe der geeigneten Zusatzweichmacher zählen zum Beispiel Di-(2-butoxyethyl)-adipat (DBEA), Di-(2-butoxyethyl)-sebacat (DBES), Di-(2-butoxyethyl)-azelat, Di-(2-butoxyethyl)-glutarat. Di-(2-butoxyethoxyethyl)-adipat (DBEEA), Di-(2-butoxyethoxyethyl)-sebacat (DBEES), Di-(2-butoxyethoxyethyl)-azelat, Di-(2-butoxyethoxyethyl)-glutarat, Di-(2-hexoxyethyl)-adipat, Di-(2-hexoxyethyl)-sebacat, Di-(2-hexoxyethyl)-azelat, Di-(2-hexoxyethyl)-glutarat, Di-(2-hexoxyethoxyethyl)-adipat, Di-(2-hexoxyethoxyethyl)-sebacat, Di-(2-hexoxyethoxyethyl)-azelat, Di-(2-hexoxyethoxyethyl)-glutarat, Di-(2-butoxyethyl)-phthalat und/oder Di-(2-butoxyethoxyethyl)-phthalat.

Neben den Weichmachern geringer Polarität und den Co-Weichmachern der Formeln I oder II können erfindungsgemäße Folien weitere, dem Fachmann bekannte Zusätze enthalten wie Restmengen an Wasser, UV-Absorber, Antioxidantien, Haftungsregulatoren, optische Aufheller, Stabilisatoren, Farbmittel, Verarbeitungshilfsmittel, und/oder oberflächenaktive Stoffe.

Es ist auch möglich, Weichmachergemische aus Weichmachern geringer und höherer Polarität (Standard-Weichmacher) einzusetzen. Der Anteil der Standard-Weichmacher höherer Polarität kann zwischen 5 - 15 Gew.%, bezogen auf die Gesamtformulierung, liegen. Als Weichmacher höherer Polarität gelten Weichmacher mit einem Löslichkeitsparameter δ größer/gleich 8,60 (cal/cm³)^{1/2} bzw. 17,59 (J/cm³)^{1/2} wie z.B. Triethylenglykol-di-n-heptanoat (3G7), Triethylenglykol-di-2-ethylbutyrat (3GH), Triethylenglykol-di-n-hexanoat sowie Dihexyladipat (DAH).

Die größten Vorteile durch den erfindungsgemäßen Zusatz der Co-Weichmacher ergeben sich, wenn die erfindungsgemäße Folie mindestens einen Weichmacher mit geringer Polarität in einer solchen Menge enthält, die ohne Zusatz der Co-Weichmacher gemäß dem im folgenden beschriebenen Ausschwitztest inkompatibel zu dem teilacetalisierten Polyvinylalkohol ist.

Da auch die Co-Weichmacher der Formeln I und II die Eigenschaften von Weichmachern für teilacetalisierte Polyvinylalkohole besitzen, werden bevorzugt der Weichmacher geringer Polarität und der mindestens eine Co-Weichmacher in einer Gesamtmenge eingesetzt, in welcher der Weichmacher mit geringer Polarität ohne Zusatz des Co-Weichmachers gemäß Ausschwitztest inkompatibel zum teilacetalisierten Polyvinylalkohol ist.

Zur Beurteilung der Weichmacherkompatibilität bzw. zur Bestimmung, ob ein Weichmacher in einer bestimmten eingesetzten Menge bei einer bestimmten Rezeptur noch kompatibel ist oder nicht, wird ein modifizierter, im folgenden als Ausschwitz-Test bezeichneter Standard-Test eingesetzt, der in der EP 0 877 665 B1 beschrieben ist. In Abwandlung dieses auf die quantitative Bestimmung des Weichmacherverlustes der PVB-Folie gerichteten Tests wird im Rahmen der vorliegenden Erfindung ein Weichmacher als kompatibel bezeichnet, der aus einer Folie nach einer bestimmten Behandlung nicht in Tropfenform oder als Film sichtbar ausgetreten ist. Der Ausschwitz-Test wird in den Beispielen genauer beschrieben.

Bevorzugt wird als teilacetalisierter Polyvinylalkohol ein teilbutyralisierter Polyvinylalkohol (Polyvinylbutyral) mit einem Hydoxylgruppengehalt von größer 19,5 Gew.%, berechnet nach ASTM D 1396 als Polyvinylalkohol (PVOH), in dieser Anmeldung auch verkürzt Polyvinylalkohol-Gehalt oder PVOH-Gehalt genannt, eingesetzt, da sich bei diesen Harzen der Vorteil des erfindungsgemäßen Zusatzes an Co-Weichmacher am besten nutzen lässt. Grundsätzlich verbessert der Einsatz der Co-Weichmacher die Verträglichkeit jedoch auch bei PVB-Rezepturen, deren Polyvinylalkohol-Gehalt unterhalb von 19,5 Gew.% liegt. In der Regel liegt der PVOH-Gehalt der erfindungsgemäß eingesetzten teilacetalisierten Polyvinylalkohole zwischen 13 und 25 %.

Nach einer bevorzugten Ausgestaltung der Erfindung besteht der Alkoholteil der Verbindungen I und II (d.h. die Gruppen R¹-O(-R²-O)ₙ-; -(O-R⁴-)ₘO-R⁶) aus einem ein- oder mehrfach ethoxylierten aliphatischen Alkohol, mit mindestens 3 Kohlenstoffatomen und/oder einem mittleren Ethoxylierungsgrad von 1 bis 10. Besonders bevorzugt sind mehrfach ethoxylierte aliphatische Alkohole 4 bis 20 Kohlenstoffatome und/oder einen mittleren Ethoxylierungsgrad von 1 bis 5.

Als Weichmacher geringer Polarität werden bevorzugt Dialkyladipate mit einem Alkylrest mit mehr als 6 Kohlenstoffatomen und Oligoglycolsäureester mit einem Carbonsäurerest mit mehr als 7 Kohlenstoffatomen insbesondere Triethylenglykol-di-2-ethylhexanoat (3G8), Dioctyladipat (DOA), Diethylenglycol-di-2-ethylhexanoat und/oder Tetraethylenglycoldi-2-ethylhexanoat eingesetzt. Die Erfindung ist daher nicht auf 3G8 beschränkt, die Verwendung der Co-Weichmacher kann vielmehr auch mit anderen Weichmachern, die aufgrund ihres apolaren Charakters in den gewünschten Mengen inkompatibel zu dem eingesetzten PVB-Harz sind, kombiniert werden.

Als Weichmacher geringer Polarität im Bezug auf Polyvinylbutyral werden in dieser Beschreibung solche Weichmacher betrachtet, die bei 25 °C einen Löslichkeitsparameter δ kleiner 8,60 (cal/cm³)^{1/2} bzw. 17,59 (J/cm³)^{1/2} aufweisen. Der Einfachheit halber kann δ anhand der sogenannten Small'schen Konstanten, wie sie sich tabelliert in "Lösungsmittel und Weichmachungsmittel" finden (Band 1, 8. Auflage, Seite 593, Gnamm/Fuchs, Wissenschaftliche Verlagsgesellschaft mbH Stuttgart 1980), ermittelt werden. Beispielsweise kommt Triethylenglykol-di-n-heptanoat (3G7) ein δ von 8,71 (cal/cm³)^{1/2} zu, während Triethylenglykol-di-2-ethylhexanoat (3G8) ein δ von 8,51 (cal/cm3)^{1/2} hat. Dioctyladipat (DOA) mit einem Löslichkeitsparameter von 8,46 (cal/cm³)^{1/2}, Diethylenglykol-di-2-ethylhexanoat mit einem Löslichkeitsparameter von 8,39 (cal/cm³)^{1/2} sowie Tetraethylenglykol-di-2-ethylhexanoat mit einem Löslichkeitsparameter von 8,49 (cal/cm³)^{1/2} sind Beispiele für weitere bevorzugte, apolare Weichmacher.

Weitere Gegenstände der Erfindung sind die Verwendung einer oder mehrerer Verbindungen der Formeln I oder II als ein die Verträglichkeit eines Weichmachers mit geringer Polarität in teilacetalisiertem Polyvinylalkohol erhöhender Co-Weichmacher und Verbundsicherheitsglas mit wenigstens einer Glasscheibe und wenigstens einer an diese Glasscheibe angrenzenden erfindungsgemäßen Folie.

Die erfindungsgemäßen Folien können insbesondere zur Herstellung von Verbundsicherheitsgläsern durch Laminieren mit einer oder mehreren Glasscheiben in dem Fachmann bekannter Weise verwendet werden. Die Verbundsicherheitsgläser können im Automobilbereich z.B. als Windschutzscheibe, als auch im Baubereich eingesetzt werden.

### Beispiele

### Ausschwitztest

Zur Bestimmung des Ausschwitzverhaltens einer PVB-Folie wird ein Teststreifen in einer mit Wasserdampf gesättigten Atmosphäre für 30 Tage gelagert. Durch die Aufnahme von Wasser und der damit einher gehenden Zunahme der Polarität, lässt sich bei wenig verträglichen Systemen der Weichmacher verdrängen, so dass dieser mit der Zeit an der Oberfläche der Folie als gut sichtbarer Film oder in Tropfenform austritt. Bei verträglichen Formulierungen kann an Teststreifen nach 30 Tagen kein Weichmacheraustritt festgestellt werden, wogegen dies bei unverträglichen Formulierungen häufig schon nach 24 h der Fall ist. Zur Einstellung einer Atmosphäre mit hoher relativer Luftfeuchtigkeit (RL) wird in einem geschlossenen Gefäß, wie z.B. einem Glasexsiccator, eine gesättigte wässrige Lösung aus Kupfersulfatpentahydrat mit einem Bodensatz hergestellt. Über dieser Lösung stellt sich bei 20 °C eine Gleichgewichtsfeuchte von 98 % RL ein.

Für die Herstellung von weichgemachten PVB-Folien zur Überprüfung ihres Ausschwitzverhaltens kann die Folienmasse z.B. auf einem Walzenstuhl oder durch Extrusion homogenisiert werden.

Alle erfindungsgemäßen Folien der Beispiele erfüllen die Anforderungen, die üblicherweise an PVB-Folie für Verbundsicherheitsglas gestellt werden, das sind im einzelnen: hohe Transparenz bzw. Abwesenheit von Trübung, geringe Eigenfarbe und hier insbesondere niedriger Gelbwert, gute mechanische Festigkeit, geringer Eigengeruch, Möglichkeit der Haftungsreduktion bei Zugabe der üblichen Antihaftmittel, gute und gleichmäßige Klebewirkung zu Glas.

Anhand von Vergleichsbeispiel 1 wurde verifiziert, dass ein PVB-Harz mit einem PVOH-Gehalt von 20,2 Gew.% bei einem typischen Mischungsverhältnis (74 Gew.% PVB, 26 Gew.% 3G8) in feuchter Atmosphäre spätestens nach 30 Tagen das 3G8 teilweise wieder abgegeben hat, also Ausschwitzen zeigt.

Vergleichsbeispiel 2 zeigt, dass bei Verwendung eines herkömmlichen Weichmachers anstelle eines erfindungsgemäßen Zusatzweichmachers keine verbesserte Verträglichkeit zwischen PVB-Harz und 3G8 resultiert. Beispiele 4, 5 und 6 belegen, dass bei Verwendung eines PVB-Harzes mit einem PVOH-Gehalt von 20,5 Gew.% die erfindungsgemäßen Formulierungen selbst bei Lagerung in einer Umgebung mit 98 % RL stabil gegen Ausschwitzen sind und weder Anteile des Weichmachers 3G8 noch Anteile des Zusatzweichmachers abgeben.

| **Beispiel Nr.:** | **1** | **2** | **3** | **4** | **5** | **6** |
|---|---|---|---|---|---|---|
| **PVB-Harz** | 74 | 74 | 73 | 73 | 73 | 73 |
| PVOH-Gehalt des PVB-Harz | 20,2 | 20,2 | 20,5 | 20,5 | 20,5 | 20,5 |
| 3G8 | 26 | 22 | 27 | 22 | 22 | 18 |
| 3G7 | - | 4 | - | - | - | - |
| Palatinol® K | - | - | - | 5 | - | - |
| Di-(2-butoxyethyl)-adipat | - | - | - | - | 5 | 9 |
| Weichmacherausschwitzen nach 30 Tagen | Ja | Ja | Ja | Nein | Nein | Nein |

| | | | | | | |
|---|---|---|---|---|---|---|
| Alle Angaben in Gew.% bezogen auf die Gesamtrezeptur, Ausnahme: PVOH-Gehalt, auf die Menge des PVB-Harzes bezogen Palatinol® K = Di-(2-butoxyethyl)-phthalat der BASF AG. | | | | | | |

Sämtliche erfindungsgemäßen Formulierungen zeigen im Dunsttest, bei dem ein Laminat mit dem Aufbau Glas - Folie - Glas während 14 Tagen in einem Klima von 50 °C und 100 % relativer Feuchte gelagert wird, keine Eintrübung des Randbereiches, in dem die PVB-Folie ungeschützt der Feuchtigkeit ausgesetzt ist.

## Patentansprüche

1. Weichmacherhaltige Folie auf der Basis von teilacetalisierten Polyvinylalkoholen, enthaltend
a) 60 bis 85 Gew.% teilacetalisierten Polyvinylalkohol
b) 14 bis 39 Gew.% mindestens einen Weichmacher mit geringer Polarität,
c) 1 - 20 Gew.% mindestens einen Co-Weichmacher der Formeln I und/oder II
R¹-O(-R²-O)ₙ-CO-R⁵ I
R¹-O(-R²-O)ₙ-CO-R³-CO- (O-R⁴-)ₘO-R⁶ II
mit R¹, R⁵, R⁶: unabhängig voneinander H, aliphatischer oder aromatischer Rest mit 1 bis 12 C-Atomen,
R³: glatte Bindung, zweiwertiger aliphatischer oder aromatischer Rest mit 1 bis 12 C-Atomen
R², R⁴; unabhängig voneinander zweiwertiger aliphatischer oder aromatischer Rest mit 1 bis 12 C-Atomen
n,m : unabhängig voneinander ganze Zahlen von 1 bis 10

2. Folie nach Anspruch 1, **dadurch gekennzeichnet, dass** der Weichmacher mit geringer Polarität in einer solchen Menge eingesetzt wird, die ohne Zusatz des Co-Weichmachers gemäß Ausschwitztest inkompatibel zum teilacetalisierten Polyvinylalkohol ist.

3. Folie nach Anspruch 1, **dadurch gekennzeichnet, dass** der Weichmacher geringer Polarität und der Co-Weichmacher in einer Gesamtmenge eingesetzt werden, in welcher der Weichmacher mit geringer Polarität ohne Zusatz des Co-Weichmachers gemäß Ausschwitztest inkompatibel zum teilacetalisierten Polyvinylalkohol ist.

4. Folie nach einem der Ansprüche 1 bis 3, **dadurch gekennzeichnet, dass** als teilacetalisierter Polyvinylalkohol ein teilbutyralisierter Polyvinylalkohol (PVB) mit einem PVOH-Gehalt größer 19,5 Gew.% eingesetzt wird.

5. Folie nach einem der Ansprüche 1 bis 4, **dadurch gekennzeichnet, dass** als Weichmacher geringer Polarität Dialkyladipate mit einem Alkylrest mit mehr als 6 Kohlenstoffatomen und Oligoglycolsäureester mit einem Carbonsäurerest mit mehr als 7 Kohlenstoffatomen eingesetzt werden.

6. Folie nach einem der Ansprüche 1 bis 5, **dadurch gekennzeichnet, dass** die Weichmacher mit geringer Polarität einen Löslichkeitsparameter δ kleiner 8,60 (cal/cm³)^{1/2} besitzen.

7. Folie nach einem der Ansprüche 1 bis 6, **dadurch gekennzeichnet, dass** die Co-Weichmacher der Formel II auf Oxalsäure, Malonsäure, Glutarsäure, Bernsteinsäure, Adipinsäure, Pimelinsäure, Azelainsäure, Sebazinsäure, Terephthalsäure, Phthalsäure, Isophthalsäure und/oder Cyclohexandicarbonsäure basieren.

8. Verbundsicherheitsglas mit wenigstens einer Glasscheibe und wenigstens einer an diese Glasscheibe angrenzenden Folie nach einem der Ansprüche 1 bis 7.

9. Verwendung einer oder mehrerer Verbindungen der Formeln I oder II
R¹-O(-R²-O)ₙ-CO-R⁵ I
R¹-O(-R²-O)ₙ-CO-R³-CO-(O-R⁴-)ₘO-R⁶ II
mit R¹, R⁵, R⁶ : unabhängig voneinander H, aliphatischer oder aromatischer Rest mit 1 bis 12 C-Atomen,
R³: glatte Bindung, zweiwertiger aliphatischer oder aromatischer Rest mit 1 bis 12 C-Atomen
R², R⁴: unabhängig voneinander zweiwertiger aliphatischer oder aromatischer Rest mit 1 bis 12 C-Atomen
n und m : unabhängig voneinander ganze Zahlen von 1 bis 10 als ein die Verträglichkeit eines Weichmachers mit geringer Polarität in teilacetalisiertem Polyvinylalkohol erhöhender Co-Weichmacher.

10. Verwendung eines oder mehrerer Co-Weichmacher nach Anspruch 9, **dadurch gekennzeichnet, dass** die Co-Weichmacher in einer Menge von 1 bis 20 Gew.%, bezogen auf die Gesamtrezeptur, eingesetzt werden.

## Claims

1. A partially acetalised polyvinyl alcohol plasticised sheet containing
a) 60 to 85 % by weight partially acetalised polyvinyl alcohol
b) 14 to 39 % by weight of at least one low-polarity plasticiser,
c) 1 - 20 % by weight of at least one co-plasticiser with the formula I and/or II
R¹-O(-R²-O)ₙ-CO-R⁵ I
R¹-O(-R²-O)ₙ-CO-R³-CO- (O-R⁴-)ₘO-R⁶ II
where R¹, R⁵, R⁶: independently of one another H, aliphatic or aromatic residue with 1 to 12 C atoms,
R³: direct bond, bivalent aliphatic or aromatic residue with 1 to 12 C atoms
R² , R⁴: independently of one another bivalent aliphatic or aromatic residue with 1 to 12 C atoms
n,m: independently of one another whole numbers from 1 to 10

2. The sheet according to claim 1, **characterised in that** the low-polarity plasticiser is used in such a quantity that is incompatible with the partially acetalised polyvinyl alcohol according to the sweating test without the addition of the Co-plasticiser.

3. The sheet according to claim 1, **characterised in that** the low-polarity plasticiser and the Co-plasticiser are used in a total amount, in which the low-polarity plasticiser is incompatible with the partially acetalised polyvinyl alcohol according to the sweating test without the addition of the Co-plasticiser.

4. The sheet according to one of the claims 1 to 3, **characterised in that** a partially butyralised polyvinyl alcohol (PVB) with a PVOH content greater than 19.5 % by weight is used as the partially acetalised polyvinyl alcohol.

5. The sheet according to one of the claims 1 to 4, **characterised in that** dialkyladipates with an alkyl residue of over 6 carbon atoms and oligoglycol acid esters with a carbonic acid residue with over 7 carbon atoms are used as low-polarity plasticisers.

6. The sheet according to one of the claims 1 to 5, **characterised in that** the low-polarity plasticisers have a solubility parameter δ of less than 8.60 (cal/cm³)^{1/2}.

7. The sheet according to one of the claims 1 to 6, **characterised in that** the Co-plasticisers with formula II are based on oxalic acid, malonic acid, glutaric acid, Bernstein acid, adipic acid, pimelic acid, azelaic acid, sebacic acid, terephthalic acid, phthalic acid, isophthalic acid and/or cyclohexane dicarbonic acid.

8. A composite security glass with at least one pane of glass and at least one sheet according to one of the claims 1 to 7 adjacent to this pane of glass.

9. The use of one or more compounds with the formula I or II
R¹-O-(R²-O)ₙ-CO-R⁵ I
R¹-O (-R²-O)ₙ-CO-R³-CO- (O-R⁴-)ₘO-R⁶ II
where R¹, R⁵, R⁶: independently of one another H, aliphatic or aromatic residue with 1 to 12 C atoms,
R³: smooth bond, bivalent aliphatic or aromatic residue with 1 to 12 C atoms
R², R⁴: independently of one another bivalent aliphatic or aromatic residue with 1 to 12 C atoms
n,m: independently of one another whole numbers from 1 to 10 as a Co-plasticiser increasing the compatibility of a low-polarity plasticiser in partially acetalised polyvinyl alcohol.

10. The use of one or more Co-plasticisers according to claim 9, **characterised in that** the Co-plasticisers are used in a quantity of 1 to 20 % by weight relative to the overall formulation.

## Revendications

1. Feuille contenant des plastifiants, réalisée à base d'alcools polyvinyliques partiellement acétalisés, ladite feuille contenant
a) 60 à 85 % en poids d'alcool polyvinylique partiellement acétalisé
b) 14 à 39 % en poids d'au moins un plastifiant à faible polarité,
c) 1 à 20 % en poids d'au moins un co-plastifiant selon des formules I et/ou II
R¹-O(-R²-O)ₙ-CO-R⁵ I
R¹-O(-R²-O)ₙ-CO-R³-CO- (O-R⁴-)ₘO-R⁶ II
R¹, R⁵, R⁶ étant, indépendamment l'un de l'autre, H ou un reste aliphatique ou aromatique renferment 1 à 12 atomes de carbone,
R³ étant un reste bivalent de nature aliphatique ou aromatique renfermant 1 à 12 atomes de carbone, la liaison étant située dans le plan
R², R⁴ étant, indépendamment l'un de l'autre, un reste bivalent de nature aliphatique ou aromatique renferment 1 à 12 atomes de carbone,
n,m étant, indépendamment l'un de l'autre, un nombre entier compris entre 1 et 10

2. Feuille selon la revendication 1, **caractérisée en ce que** le plastifiant à faible polarité est ajouté dans une quantité qui, sans ajout du co-plastifiant, serait incompatible avec le alcool polyvinylique partiellement acétalisé, l'incompatibilité étant établie selon l'essai d'exsudation.

3. Feuille selon la revendication 1, **caractérisée en ce que** le plastifiant à faible polarité et le co-plastifiant sont employés dans une quantité totale qui, sans ajout du co-plastifiant, rendrait le plastifiant à faible polarité incompatible avec le alcool polyvinylique partiellement acétalisé, l'incompatibilité étant établie selon l'essai d'exsudation.

4. Feuille selon l'une des revendications 1 à 3, **caractérisée en ce que** l'alcool polyvinylique partiellement acétalisé est mis en oeuvre sous forme d'un alcool polyvinylique partiellement transformé en butyral (PVB) dont la teneur en PVOH est supérieure à 19,5 % en poids.

5. Feuille selon l'une des revendications 1 à 4, **caractérisée en ce que** le plastifiant à faible polarité est mis en oeuvre sous forme d'adipates dont le reste alkyle renferme plus de 6 atomes de carbone ou d'oligo-esters de l'acide glycolique dont le reste d'acide carboxylique renferme plus de 7 atomes de carbone.

6. Feuille selon l'une des revendications 1 à 5, **caractérisée en ce que** les plastifiants à faible polarité ont un paramètre de solubilité δ inférieur à 8, 60 (cal/cm³)^{1/2}.

7. Feuille selon l'une des revendications 1 à 6, **caractérisée en ce que** les co-plastifiants de formule II sont réalisée à base d'acide oxalique, d'acide malonique, d'acide glutarique, d'acide succinique, d'acide adipique, d'acide pimélique, d'acide azélaïque, d'acide sébacique, d'acide téréphtalique, d'acide phtalique, d'acide isophtalique et/ou acide cyclohexanedicarboxylique.

8. Verre de sécurité feuilleté comportant au moins une vitre et au moins une feuille selon l'une des revendications 1 à 7, ladite feuille étant attenante à cette vitre.

9. Utilisation d'un ou de plusieurs composés des formules I ou II
R¹-O(-R²-O)ₙ-CO-R⁵ I
R¹-O(-R²-O)ₙ-CO-R³-CO- (O-R⁴-)ₘO-R⁶ II
R¹, R⁵, R⁶ étant, indépendamment l'un de l'autre, H ou un reste aliphatique ou aromatique referment 1 à 12 atomes de carbone,
R³ étant un reste bivalent de nature aliphatique ou aromatique renfermant 1 à 12 atomes de carbone, la liaison étant située dans le plan
R², R⁴ étant, indépendamment l'un de l'autre, un reste bivalent de nature aliphatique ou aromatique renfermant 1 à 12 atomes de carbone,
n et m étant, indépendamment l'un de l'autre, des nombres entier compris entre 1 et 10 en tant que co-plastifiant destiné à augmenter la compatibilité d'un plastifiant à faible polarité dans de l'alcool polyvinylique partiellement acétalisé.

10. Utilisation d'un ou de plusieurs co-plastifiants selon la revendication 9, **caractérisée en ce que** les co-plastifiants sont mis en oeuvre dans une quantité comprise entre 1 et 20 % en poids par rapport à la recette dans son ensemble.
